# EUROPEAN PATENT APPLICATION

(11) **EP 2 716 935 A1**
(43) Date of publication of application: **09.04.2014**
(21) Application number: 13004774.9
(22) Date of filing: 03.10.2013
(51) Int. Cl.: F16H 25/24

(54) **Linear actuator**

(30) Priority: 03.10.2012 DK 201200604
(71) Applicant: LINAK A/S, DK-6430 Nordborg (DK)
(72) Inventor: Van Nguyen, Khoan, DK-6400 Sønderborg (DK)
(74) Representative: Pedersen, Soeren Skovgaard

(57) **Abstract**

The present invention relates to a linear actuator (1,44) comprising a spindle (7,51) and a spindle nut (8,52). The spindle (7,51) is driven by a reversible electric motor (9) through a transmission. A safety nut (12) is arranged in connection with the spindle nut (8,52). When the spindle (7,51) is driven, the spindle nut (8,52) is moved along the spindle in an inwards or outwards direction depending on the direction of rotation of the electric motor (9). The linear actuator (1,44) is characterized in that it comprises two mechanical stops (20,24;40,43;55,56) located in connection with the spindle nut (8,52) and where the safety nut (12) is located between the two mechanical stops, (20,24;40,43;55,56). In case the spindle nut (8,52) is not deformation-resistant, e.g. due to high surrounding temperatures the load on the actuator will be taken over by the safety nut (12). In this situation the linear actuator (1,44) will be able to remain in its position with a clearance defined as the distance between the two mechanical stops (20,24;40,43;55,56) located in connection with the spindle nut (8,52).

## Description

The present invention relates to a linear actuator comprising an electric motor, a spindle and a spindle nut, said spindle nut is made from a polymer material and engages the spindle driven by the electric motor. The linear actuator further comprises a safety nut arranged in connection with the spindle nut. Moreover, the spindle nut comprises an end wall with a contact surface for the safety nut.

For skylights, windows including roof windows and smoke ventilation panels (ventilation openings or ventilation windows) it is known to use electric opening systems for opening and closing these. The electric opening systems typically comprise a mechanical opening mechanism driven by a linear actuator as e.g. disclosed in EP 2 003 262 to Actulux A/S. In another embodiment the linear actuator alone is used for opening and closing the skylights, window, roof windows or the smoke ventilation panel. Within the field there is a common distinction between comfort ventilation and smoke ventilation. As regards the latter it can be a requirement that skylights, windows, roof windows and smoke ventilation panels are opened during a fire or smoke formation in order to ensure that heat and flue gasses can be let out. Smoke and flue gasses can have a temperature of several hundred degrees Celsius, for which reason skylights, windows, roof windows, and smoke ventilation panels and the corresponding opening mechanisms should be constructed in a manner capable of handling these temperatures.

The linear actuators used for the above-mentioned opening systems are of the type comprising a piston rod as disclosed in e.g. WO 02/29284 A1 to Linak A/S. This type of linear actuator comprises a spindle with a spindle nut. The spindle is through a transmission driven by a reversible electric motor. When the spindle is driven the spindle nut is moved in an inwards or outwards direction depending of the direction of rotation of the electric motor. The linear actuator is a separate product where the spindle, transmission and electric motor are enclosed in a housing. The housing typically consists of a motor housing and an outer tube. An inner tube is secured to the spindle nut. The inner tube is like a piston displaced in and out of the outer tube concurrently with the spindle nut being moved inwards and outwards on the spindle. At the opposite end of the spindle nut the inner tube is equipped with a front mounting. On the outer side the motor housing comprises a rear mounting. The front mounting and rear mounting are used for securing the actuator in the structure or the product which should be adjusted.

EP 0 586 326 B1 and EP 1 134 454 B1 both to Linak A/S disclose linear actuators of the type as mentioned in the introductory portion equipped with a safety nut connected to the spindle nut. The connection is usually arranged such that the safety nut during normal operation of the linear actuator is out of contact with the thread of the spindle. The safety nut will follow the spindle nut as long as the spindle nut is still intact. In case the spindle nut fails the connection is interrupted at which the safety nut through the spindle nut will take over the load on the linear actuator. In both constructions the safety nut will only be able to move the load in the direction of the load. During a compression force the linear actuator will e.g. not be able to lift the load, but only lower it. A particularly simple embodiment of the safety nut on a linear actuator is known from EP 1 800 025 to Linak A/S. This safety nut can be constructed in such a manner that it also functions if the linear actuator is subject to tension. The safety nut is usually made from metal and subsequently hardened.

DE 20 2009 013 679 U1 to Dewert Antriebs- und Systemtechnik GmbH discloses another embodiment of a linear actuator where the safety nut is located inside the inner tube in continuation of the spindle nut in the direction towards the front mounting. The inner tube comprises an internal stop ring which the safety nut can engage in case the spindle nut is no longer able to carry the load from the inner tube. Thus, the load is taken over by the safety nut however not through the defective spindle nut but directly from the inner tube.

In order to avoid unintended wearing from the safety nut itself on the spindle the safety nut in DE 20 2006 004 752 U1 to T-MOTION Technology is arranged in a spring suspension in connection with the spindle nut. Thus the safety nut is kept in a desired position relative to the thread of the spindle as long as the spindle nut is intact. The moment when the spindle nut is no longer intact the load on the linear actuator is taken over by the safety nut through the defective spindle nut.

In order to minimize wearing, reduce noise and power consumption as well as extend the life of the linear actuators the spindle nut is typically made from a polymer material and the spindle of metal, usually steel. When using spindle nuts of a polymer material instead of metal, the quantity of lubricant between the spindle and the spindle nut can be reduced considerably. However, despite from the use of lubricant between spindles and spindle nuts wearing will still occur.

It is a statutory requirement that skylights, windows, roof windows and smoke ventilation panels can maintain a given open position during a given time span as part of the firefighting or fighting of smoke formation. During that time span the required open position is only allowed to change minimally. This is owing to the fact that large changes to the flow of heat, smoke and flue gasses could endanger human beings whether it concerns persons in a building or rescue workers.

When a linear actuator is exposed to a surrounding temperature of several hundred degrees Celsius from e.g. a fire, smoke and/or flue gasses, the spindle nut of polymer will gradually lose its resistance to deformation, as it will melt and be deformed. Depending on the structure of the linear actuator this will result in various, however undesirable, consequences in terms of firefighting. If the linear actuator is located in a skylight, roof window, window or smoke ventilation panel the mentioned statutory requirements cannot be met. In DE 20 2006 004 752 U1 to T-Motion Technology a non-deformation-resistant spindle nut will result in that the inner tube when exposed to compression will be carried by the safety nut. If this structure is subject to tension, the inner tube can at worst slide off the spindle and thus lose its connection to the remaining part of the linear actuator. This will unintentionally result in that e.g. a smoke ventilation panel will close or open completely. If the inner tube does not lose its connection to the remaining part of the actuator a varying tension force can cause the inner tube to slide back and forth along the spindle. This will cause an unintended variation to the opening of the smoke ventilation panel and thus the air flow there through.

The purpose of the invention is to provide a linear actuator which when exposed to high surrounding temperatures is capable of maintaining a given position with a minimum clearance, regardless of whether the actuator is subject to compression, tension or it changes between these types of load.

This is achieved according to the invention in that a linear actuator comprises two mechanical stops for the safety nut located in connection with the spindle nut and in that the safety nut is located between the two mechanical stops such that in case the spindle nut is not deformation-resistant, the maximum clearance of the safety nut is defined as the distance between the two mechanical stops.

If the linear actuator is exposed to a high surrounding temperature, the spindle nut will gradually lose its resistance to deformation, as it will melt and be deformed. Consequently, the load on the inner tube can no longer be carried by the spindle nut but is taken over by the safety nut. At this point the spindle nut will completely have lost its load-carrying ability. Consequently the load on the inner tube is completely carried by the safety nut in that this engages one of the two mechanical stops. With a relatively small clearance - defined as the distance between the two mechanical stops located in connection with the spindle nut - the linear actuator is thus capable of holding a given position regardless of whether the actuator is subject to compression or tension. This clearance is however minimal and does not cause unintended changes to the air flow through e.g. skylights, roof windows, windows and smoke ventilation panels, regardless of whether the linear actuator is subject to compression, tension or it changes between these types of load.

In an embodiment of the linear actuator the two mechanical stops and the safety nut have a greater deformation-resistance than the spindle nut. During thermal stress the spindle nut will first lose its resistance to deformation. Thus, the linear actuator will be able to maintain the position as long as the mechanical stops and the safety nut do not lose their resistance to deformation due to an increasing surrounding temperature. As long as this difference in the resistance to deformation is maintained, it is possible to use different types of material and thus consider other construction parameters.

In another embodiment the linear actuator comprises an inner tube secured to the spindle nut and the two mechanical stops are located on or in connection with the inner tube. Thus the invention can easily be incorporated into linear actuators of the type comprising a piston rod.

In an embodiment the linear actuator according to the invention comprises a spindle nut casing and an end piece, each comprising a mechanical stop and an opening through which the spindle can pass and where the inner tube is secured to the spindle nut casing. Thus, an existing linear actuator can without significant alterations be retrofitted to maintain a given position with a minimum clearance during high surrounding temperatures.

In another embodiment of the linear actuator one of the mechanical stops is located in the inner tube and the other mechanical stop is incorporated into an end piece. Both mechanical stops comprise an opening through which the spindle can pass and where the spindle nut and the safety nut are enclosed by the inner tube and the two mechanical stops. In comparison with the before mentioned embodiment this inner tube can replace the spindle nut casing.

In an embodiment the linear actuator comprises a transmission. Thus a desired exchange between the motor and the spindle can be achieved.

The linear actuator can comprise a front mounting and a rear mounting. In an embodiment of the linear actuator the safety nut is located between the spindle nut and the rear mounting.

In a further embodiment the two mechanical stops, the inner tube and/or the safety nut are made from metal. Due to the great deformation-resistance of the metal these elements will not lose their resistance to deformation before the spindle nut of polymer.

The invention further relates to a linear actuator system comprising a control, an operating device and a linear actuator as defined above.

The invention further relates to a skylight or roof window comprising a linear actuator as defined above.

The invention further relates to an embodiment where the linear actuator comprises an electric motor, a spindle and a spindle nut, said spindle nut is made from a polymer material and engages the spindle driven by the electric motor, a safety nut arranged in connection with the spindle nut and where the spindle nut comprises an end wall for the safety nut and an inner tube secured to the spindle nut. In this embodiment the linear actuator further comprises two mechanical stops located on or in connection with the inner tube and where the safety nut is located between the two mechanical stops in such a manner that in case the spindle nut is not deformation-resistant the maximum clearance between the inner tube and the safety nut is defined by the distance between the two mechanical stops located on or in connection with the inner tube.

Further characteristics of the invention will appear from the embodiments, which will be described more fully below with reference to the accompanying drawing in which:
Fig. 1 shows a perspective view of a linear actuator,
Fig. 2 shows the linear actuator in fig. 1 where one of the housing parts has been removed,
Fig. 3 shows a longitudinal section through the linear actuator in fig. 1,
Fig. 4 shows a longitudinal section through the area at the spindle nut in fig. 3 shown in an enlarged scale,
Fig. 5 shows an exploded perspective view of a spindle nut, safety nut and a spindle nut casing,
Fig. 6a-9b show a longitudinal section seen from one end of a spindle nut, safety nut and a spindle nut casing,
Fig. 10 shows a longitudinal section of the assembled spindle nut, safety nut and the spindle nut casing in fig. 5-9b,
Fig. 11 shows a longitudinal section of another embodiment of a spindle nut, safety nut inner tube and end piece,
Fig. 12 shows a perspective view of a rodless actuator,
Fig.13 shows the rodless actuator in fig. 12, where the lower part of the housing has been removed and the outer tube is shown with a longitudinal section, and
Fig. 14 shows a linear actuator system comprising two linear actuators according to the invention.

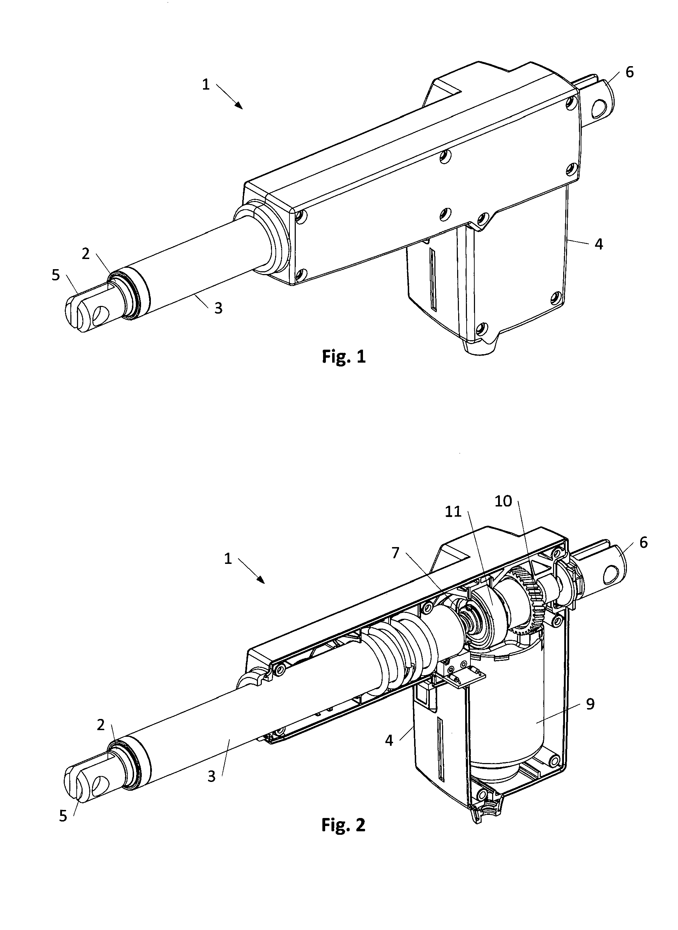

Figur 1 shows a linear actuator 1 of the type comprising a piston rod. The piston rod is also known as an inner tube 2. The linear actuator 1 comprises an outer tube 3 and a housing. The latter is constituted by two halves (not referenced) with a contact surface corresponding to the longitudinal axis of the linear actuator. The linear actuator 1 further comprises a front mounting 5 at the outer end of the inner tube 2 and a rear mounting 6 secured to the housing 4.

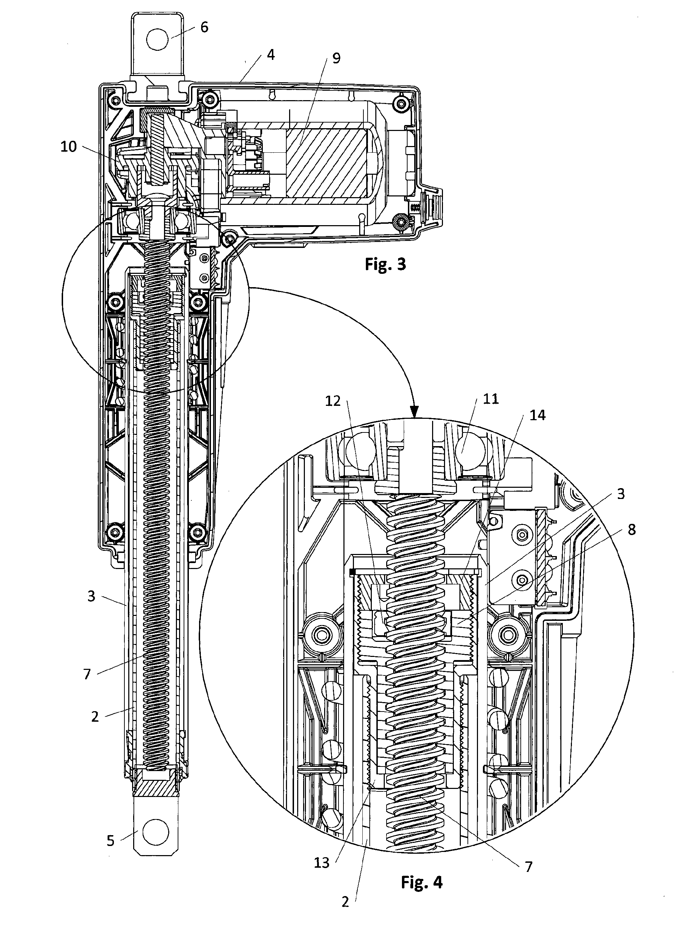

Figure 2 shows the linear actuator 1 where one of the housing halves has been removed. Basically, the linear actuator 1 comprises a spindle unit consisting of a spindle 7 on which a spindle nut 8 (see fig. 3) made from a polymer material is arranged. The spindle nut 8 can be secured against rotation. The inner tube 2 is secured to the spindle nut 8 and can thus be moved in and out of the outer tube 3 depending on the direction of rotation of the spindle 7. The spindle 7 is driven by a reversible electric motor 9 through a transmission. Here, the transmission comprises a worm (not shown) as an extension of the drive shaft of the electric motor as well as a worm wheel 10 secured to the spindle 7. Further, a bearing 11 is secured to the spindle 7. The bearing can e.g. be a ball bearing or a roller bearing. The spindle 7 is self-locking, i.e. the thread pitch of the spindle 7 is configured such that the spindle 7 cannot be rotated as a result of the axial load on the spindle nut 8.

Figure 3 shows a longitudinal section through the linear actuator 1 and figure 4 shows an enlarged scale of the same section in the area near the spindle nut 8. A safety nut 12 is located at the end of the spindle nut 8 and is retained relative to the spindle nut 8 in such a manner that it follows the spindle nut 8 as a slave as long as the thread of the spindle nut is intact and thus out of engagement with the thread of the spindle 7. In case the thread of the spindle nut 8 fails e.g. due to irregular wearing or material defect the load on the inner tube 2 will cause the spindle nut 8 and thus the safety nut 12 to settle, i.e. slide somewhat backwards, such that the spindle nut 12 will get into contact with the thread on the spindle 7. The safety nut 12 thus takes over the load. The spindle nut 8 including the safety nut 12 is enclosed by a spindle nut housing comprising a casing 13 and an end piece 14.

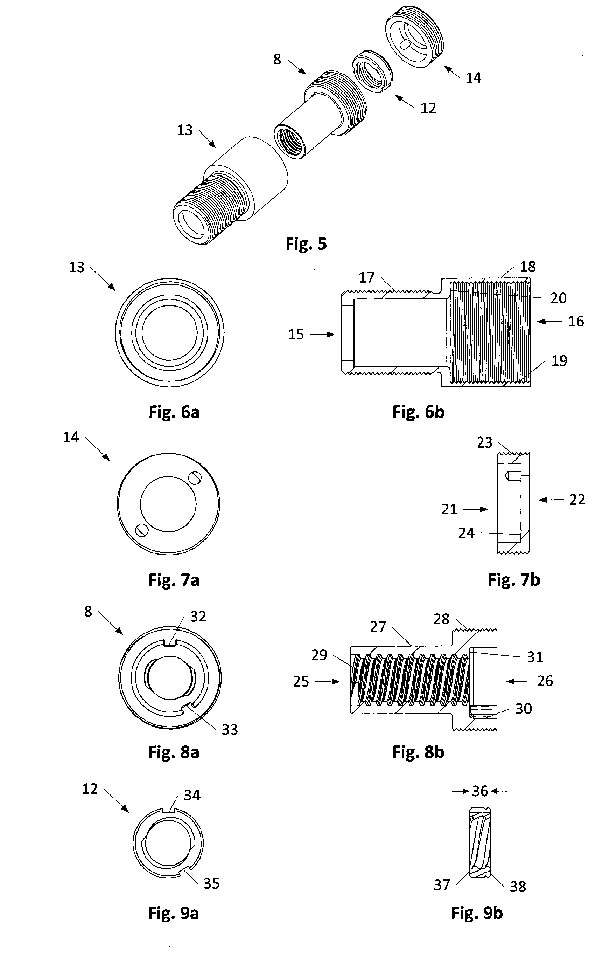

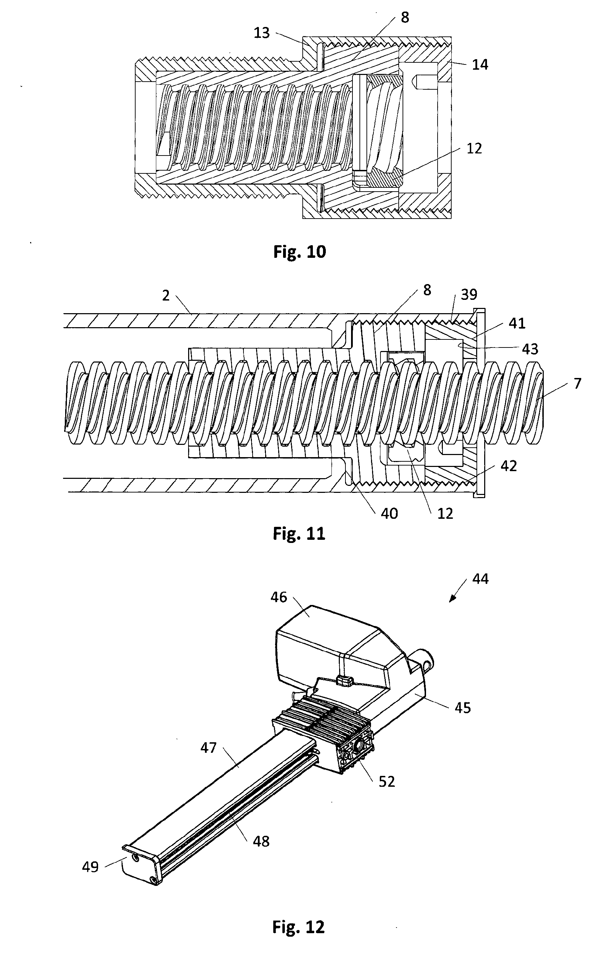

Figure 5 shows the spindle nut 8, the safety nut 12 and the spindle nut housing in an exploded perspective view and the figures 6-9 show the same parts separately in a longitudinal section seen from one end. Figure 10 shows a longitudinal section of the assembled spindle nut 8, the safety nut 12 and the spindle nut casing. As it appears from these figures, the casing 13 is tubular and has an opening at a first and second end thereof 15,16. The casing 13 further comprises a first section with external thread 17 and a second section 18. The second section 18 of the casing 13 is equipped with internal thread 19. The external diameter at the second section 18 is larger than the external diameter of the first section 17. Likewise, the internal diameter at the second section 18 is larger than the internal diameter at the first section 17. Furthermore, the diameter at the opening 15 is smaller than the internal diameter at the threaded piece 17. The internal passage from the second section 18 to the threaded piece 17 constitutes a mechanical stop 20 in the shape of a ring shaped wall. The opening in the ring shaped wall constituting the mechanical stop 20 is smaller than the external diameter of the safety nut 12. Thus the safety nut 12 cannot pass the mechanical stop 20.

The end piece 14 is designed as a short tube, which likewise has an opening at a first and second end 21,22. The outer side of the end piece 14 has thread 23. The internal diameter at the opening at the second end 22 is smaller than the internal diameter at the opening at the first end 21. Thus the end piece 14 comprises a mechanical stop 24 in the shape of an internal end surface namely as a ring spaped wall at the second end 22. The internal diameter at the opening at the second end 22 is smaller than the diameter of the safety nut 12, which as a result thereof cannot pass the mechanical stop 24.

The spindle nut 8 is tubular with an opening at either end 25,26. The spindle nut 8 comprises a first section 27 and a second section 28 with external thread. Internally, the spindle nut 8 comprises internal thread 29 adapted for engagement with the thread on the spindle 7. The internal thread 29 extends from the opening 25 to the opening 26. Between the opening 26 and the internal thread 29 the spindle nut comprises a hollow outlined by an internal side wall 30 and an end wall 31 in the shape of an internal end surface in which hollow the safety nut 12 can be placed. The internal side wall 30 is designed with two ribs 32,33, which can engage corresponding grooves 34,35 on the safety nut 12 when it is located in the hollow. Thus is ensured that the safety nut 12 follows the rotation of the spindle nut 8 when this is displaced back and forth on the spindle 7 due to the rotation thereof. It is noted that the shown sections of the safety nut 12 in the figures 3,4,10,11 run through one of the grooves 34,35. Thus, the safety nut 12 in these sections appears unsymmetrical. The length 36 of the safety nut 12 is defined as the distance between its ends 37,38 measured in proportion to the longitudinal axis of the safety nut.

The spindle nut 8, the safety nut 12 and the spindle nut housing 13,14 are assembled as follows. The first section 27 of the spindle nut 8 is led into the casing 13 at the opening 16 such that the first section 27 of the spindle nut 8 engages the mechanical stop 20 of the casing 13 at the second section 17 and such that the threaded second section 28 of the spindle nut 8 is brought into engagement with the internal thread 19 of the casing 13. In this manner the spindle nut 8 is secured in the casing 13. The safety nut 12 is located in the hollow of the spindle nut 8 as described above. The external thread 23 on the end piece 14 is consequently brought into engagement with the internal thread 19 of the casing 13. Thus the spindle nut 8 including the safety nut 12 is enclosed by the spindle nut housing consisting of the casing 13 and the end piece 14.

The inner tube 2 can be secured to the spindle nut 8 through the spindle nut casing 13 by bringing the thread (not referenced) opposite the front mounting 5 on the inner tube 2 into engagement with the threaded second section 17.

In case the linear actuator 1 is exposed to high surrounding temperatures the spindle nut 8 will gradually melt and be deformed, at which it will gradually lose its resistance to deformation (dimensionally shape). The load on the inner tube 2 can hereafter no longer be carried by the spindle nut 8 but will be taken over by the safety nut 12. At this point the spindle nut 8 will completely have lost its load-bearing ability. Subsequently, the load on the inner tube 2 is completely carried by the safety nut 12 in that this either when subject to compression engages the mechanical stop 20 in the casing 13 or when subject to tension engages the mechanical stop 24 on the end piece 14. With a relatively small clearance the linear actuator is thus capable of holding the inner tube 2 in a given position regardless of whether the actuator is subject to compression, tension or it changes between these types of load. The clearance is defined as the distance between the mechanical stop 24 on the end piece 14 and the mechanical stop 20 on the casing 13 minus the length 36 of the safety nut 12. This clearance is however minimal and does not cause unintended changes to the air flow through e.g. skylights, roof windows, windows and smoke ventilation panels. The load on the linear actuator cannot rotate the spindle 7 as the spindle 7 is self-locking.

In an embodiment (not shown) the inner tube 2 can be secured against rotation, e.g. by means of a spline connection between the first section 18 on the casing 13 and the outer tube 3.

In another embodiment of the invention one of the mechanical stops is integrated into the inner tube 2. Thus figure 11 shows a longitudinal section of an inner tube 2 at the spindle nut 8. As it appears the inner tube 2 comprises an internal threaded section 39 terminating in a mechanical stop 40 in the shape of a ring shaped wall. The spindle nut 8 and corresponding safety nut 12 are led into the inner tube 2 in such a manner that the external thread (not referenced) of the spindle nut 8 engages the internal threaded piece 39 of the inner tube 2 such that the spindle nut 8 engages the mechanical stop 40. The inner tube 2 is closed by means of an end piece 41 with external thread 42, which is brought into engagement with the internal threaded piece 39 of the inner tube 2. The end piece 41 is designed as a short tube. The end piece 41 has a mechanical stop 43 in the shape of an internal end surface namely a ring shaped end wall. If the linear actuator is exposed to high surrounding temperatures the spindle nut will gradually melt and be deformed. The spindle nut 8 will thus lose its resistance to deformation and the load on the linear actuator can no longer be carried by the spindle nut 8. The load will instead be taken over by the safety nut 12 in that this engages either the mechanical stop 43 on the end piece 41 or the mechanical stop 40 in the inner tube 2. With a relatively small clearance the linear actuator is thus capable of holding the inner tube 2 in a given position regardless of whether the linear actuator is subject to compression, tension or it changes between these types of load. The clearance is defined as the distance between the two mechanical stops 40,43 minus the length 36 of the safety nut 12 (see figures 9a-b). This clearance is however minor and does not cause unintended changes to the air flow through e.g. skylights, roof windows, windows and smoke ventilation panels. In an alternative embodiment the mechanical stop 40 is designed as a plastic deformation of the inner tube 2.

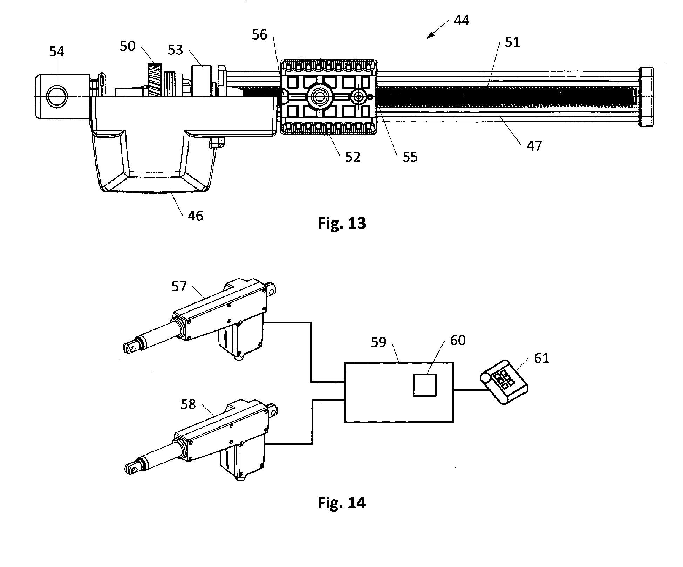

Figs. 12 and 13 show a rodless linear actuator 44 comprising a housing consisting of a lower part 45 and an upper part 46. An outer tube 47 with a longitudinal groove 48 is embedded with one end in the housing. The free end of the outer tube 47 is closed by means of an end cover 49. In fig. 13 the lower part 45 has been removed and the outer tube is shown with a longitudinal section. The rodless actuator 44 comprises a reversible electric motor, on which the motor shaft has a protruding end designed as a worm in engagement with a worm wheel 50.

The rodless actuator 44 comprises a spindle 51 on which a mounting bracket 52 is arranged. The mounting bracket 52 comprises a spindle nut of a polymer material (not shown) in engagement with the spindle 51. The mounting bracket 52 extends into the longitudinal groove 48 of the outer tube 47 at which the mounting bracket 52 and thus also the spindle nut are secured against rotation. The worm wheel 50 is arranged at the end of the spindle 51 and is thus in a driving connection there with. Depending on the direction of rotation of the electric motor the mounting bracket 52 is moved in an inwards or outwards direction along the outer tube 47. The spindle 51 further comprises a bearing 53. Finally, the rodless linear actuator 44 is equipped with a rear mounting 56 consisting of a cylinder piece with an eye.

The spindle nut in the mounting bracket 52 comprises a safety nut (not shown) retained relative to the spindle nut. The safety nut follows the spindle nut as long as the thread of the spindle nut is intact and thus out of engagement with the thread of the spindle 51. In case the thread of the spindle nut fails, e.g. due to irregular wearing or material defect the load on the spindle nut and thus the safety nut will settle. Thus, the spindle nut and the safety nut will slide somewhat backwards, such that the safety nut will get into contact with the thread of the spindle 51. The safety nut thus takes over the load on the mounting bracket 52 via the spindle nut. The mounting bracket 52 comprises two mechanical stops 55,56 located at each opening for the spindle in the mounting bracket 52, respectively.

If the rodless linear actuator 44 is exposed to a high surrounding temperature the spindle nut will gradually melt and be deformed, at which it will gradually lose its resistance to deformation. The load on the spindle nut will therefore be taken over by the safety nut. At this point the spindle nut will completely have lost its load-bearing ability. Subsequently, the load on the mounting bracket 52 is completely carried by the safety nut in that this either when subject to compression engages the mechanical stop 56 or when subject to tension engages the mechanical stop 55. With a relatively small clearance the rodless linear actuator 44 is thus capable of holding the mounting bracket in a given position regardless of whether the linear actuator is subject to compression, tension or it changes between these types of load. The clearance is defined as the distance between the two mechanical stops 55,56 minus the length of the safety nut. This clearance is however minimal and does not cause unintended changes to the air flow through e.g. skylights, roof windows, windows and smoke ventilation panels, regardless of whether the linear actuator is subject to compression, tension or it changes between these types of load. The load on the rodless actuator 44 cannot rotate the spindle as the spindle 51 is self-locking.

The mounting bracket 52 and the spindle nut can also be constructed as one unit. The two mechanical stops 55,56 can here be designed as part of a casing corresponding to the casing in fig. 5. This casing can partly or entirely enclose the mounting bracket 52.

Figure 14 shows a linear actuator system comprising two linear actuators of the type described in the figures 1-11. In addition to the two linear actuators 57,58 the linear actuator system further comprises a control box 59 with a control 60 and an operation device 61.

## Claims

1. Linear actuator comprising an electric motor (9), a spindle (7,51) and a spindle nut (8,52), said spindle nut (8,52) is made from a polymer material and engages the spindle (7,51) driven by the electric motor (9), a safety nut (12) arranged in connection with the spindle nut (8,52) and where the spindle nut (8,52) comprises a wall (31) with a contact surface for the safety nut (12), **characterized in**
**that** the linear actuator comprises two mechanical stops (20,24;40,43;55,56) for the safety nut (12) located in connection with the spindle nut (8,52) and where the safety nut (12) is located between the two mechanical stops (20,24;40,43;55,56) in such a manner that in case the spindle nut (8) is not deformation-resistant the maximum clearance of the safety nut (12) is defined by the distance between the two mechanical stops (20,24;40,43;55,56).

2. Linear actuator according to claim 1 **characterized in that** the mechanical stops (20,24;40,43;55,56) and the safety nut (12) are more deformation-resistant that the spindle nut (8,52).

3. Linear actuator according to claim 1 **characterized in that** it comprises an inner tube (2) secured to the spindle nut (8) and where the two mechanical stops (20,24;40,43) are located on or in connection with the inner tube (2).

4. Linear actuator according to the claims 1-3 **characterized in that** it comprises a casing (13) and an end piece (14), each comprising a mechanical stop (20,24) and an opening (15,26) through which the spindle (7) can pass.

5. Linear actuator according to claim 4 **characterized in that** the inner tube (2) is secured to the casing (13).

6. Linear actuator according to claim 3 **characterized in that** the inner tube (2) comprises at least one mechanical stop (40) with an opening through which the spindle (7) can pass.

7. Linear actuator according to claim 6 **characterized in that** it comprises an end piece (41) with a mechanical stop (43) and with an opening through which the spindle (7) can pass and where the spindle nut (8) and the safety nut (12) are enclosed by the inner tube (2) and the two mechanical stops (40,43).

8. Linear actuator according to one or more of the claims 1-7 **characteri zed in that** it comprises a transmission.

9. Linear actuator according to one or more of the claims 1-8 **characteri zed in that** it comprises a front mounting (5) and a rear mounting (6) and where the safety nut (12) is located between the spindle nut (8) and the rear mounting (6).

10. Linear actuator according to claim 1 **characterized in that** the safety nut (12) is made from metal.

11. Linear actuator according to claim 1 **characterized in that** the mechanical stops (20,24;40,43;55,56) are made from metal.

12. Linear actuator according to one or more of the claims 1-11 **characte rized in that** the inner tube (2) is made from metal.

13. Linear actuator system comprising a control (60) and an operation device (61) **characterized in that** it further comprises a linear actuator as defined in one or more of the claims 1-12.

14. A skylight comprising a linear actuator according to one or more of the claims 1-12.

15. A roof window comprising a linear actuator according to one or more of the claims 1-12.
